# EUROPEAN PATENT APPLICATION

(11) **EP 4 668 564 A1**
(43) Date of publication of application: **24.12.2025**
(21) Application number: 24195195.3
(22) Date of filing: 19.08.2024
(51) Int. Cl.: H02M 3/335, H02M 1/00, H02M 3/00, H02M 1/32

(54) **METHOD OF CONTROLLING FULL-BRIDGE RESONANT CONVERTER**

(30) Priority: 21.06.2024 CN 202410808027
(71) Applicant: Delta Electronics, Inc., Taoyuan City 320023 (TW)
(72) Inventor: YANG, Shing-Feng, 320023 Taoyuan City (TW); HSUEH, Cheng-Hao, 320023 Taoyuan City (TW); TSAI, Chi-Ting, 320023 Taoyuan City (TW); LI, Cheng-Te, 320023 Taoyuan City (TW)
(74) Representative: 2K Patentanwälte Blasberg Kewitz & Reichel

(57) **Abstract**

A method of controlling a full-bridge resonant converter includes steps of: operating a first upper switch (Q1) in a first control action during a first time interval (T1); operating a first lower switch (Q2) in a second control action during the first time interval (T1); operating a second upper switch (Q3) in a third control action during the first time interval (T1); operating a second lower switch (Q4) in a fourth control action during the first time interval (T1); operating the first upper switch (Q1) in the fourth control action during a second time interval (T2) after the first time interval (T1); operating the first lower switch (Q2) in the third control action during the second time interval (T2); operating the second upper switch (Q3) in the second control action during the second time interval (T2); operating the second lower switch (Q4) in the first control action during the second time interval (T2).

## Description

### BACKGROUND

### Technical Field

The present disclosure relates to a method of controlling a full-bridge resonant converter, and more particularly to an interleaved control method with asymmetric and non-complementary characteristics for a full-bridge resonant converter.

### Description of Related Art

The statements in this section merely provide background information related to the present disclosure and do not necessarily constitute prior art.

With the global energy shortage, countries around the world are gradually paying attention to the investment and development of green energy-related industries. With the vigorous development of electrification and smart technology in recent years, coupled with the formulation of relevant environmental protection regulations, various car manufacturers are also actively developing plug-in hybrid electric vehicles (PHEVs) and battery electric vehicles (BEVs) to reduce carbon emission footprint and promote sustainable development of industry. For electric vehicles, the on-board charger is one of the important components. It is mainly responsible for converting the AC power of the power grid system into DC power and then charging the battery pack. According to the current application specifications of the automotive market, the conversion energy demand of the car charger is approximately 7-22 kW. In order to meet the requirements of this specification, the design needs to use a full-bridge converter topology as the main circuit structure. Since the battery pack has a wide range of voltage charging curve applications, and in order to reduce the weight and volume of the car charger and increase the power density, the full-bridge LLC resonant converter topology with high conversion efficiency and adjustable output voltage is the first choice in design and is widely used.

Therefore, how to design a method of controlling a full-bridge resonant converter to solve the problems and technical bottlenecks in the existing technology has become a critical topic in this field.

### SUMMARY

An objective of the present disclosure is to provide a method of controlling a full-bridge resonant converter. The full-bridge resonant converter includes a first bridge arm and a second bridge arm of an input side circuit of the full-bridge resonant converter. The first bridge arm includes a first upper switch and a first lower switch, the second bridge arm includes a second upper switch and a second lower switch. The method includes steps of operating the first upper switch in a first control action during a first time interval, wherein the first control action is an alternating action between a turned-off state and a first period turned-on state; operating the first lower switch in a second control action during the first time interval, wherein the second control action is an alternating action between the first period turned-on state and the turned-off state; operating the second upper switch in a third control action during the first time interval, wherein the third control action is an alternating action between a second period turned-on state and the turned-off state, wherein a time length of the second period turned-on state is greater than a time length of the first period turned-on state; operating the second lower switch in a fourth control action during the first time interval, wherein the fourth control action is an alternating action between the turned-off state and the second period turned-on state; operating the first upper switch in the fourth control action during a second time interval after the first time interval; operating the first lower switch in the third control action during the second time interval; operating the second upper switch in the second control action during the second time interval; operating the second lower switch in the first control action during the second time interval.

In one embodiment, during the first time interval, the first period turned-on state of the second control action of the first lower switch partially overlaps with the second period turned-on state of the third control action of the second upper switch.

In one embodiment, during the first time interval, the first period turned-on state of the first control action of the first upper switch partially overlaps with the second period turned-on state of the fourth control action of the second lower switch.

In one embodiment, during the second time interval, the first period turned-on state of the second control action of the second upper switch partially overlaps with the second period turned-on state of the third control action of the first lower switch.

In one embodiment, during the second time interval, the first period turned-on state of the first control action of the second lower switch partially overlaps with the second period turned-on state of the fourth control action of the first upper switch.

In one embodiment, during the first time interval, the first upper switch and the first lower switch operate in a hard switching.

In one embodiment, during the first time interval, the second upper switch and the second lower switch operate in a soft switching.

In one embodiment, during the second time interval, the first upper switch and the first lower switch operate in a soft switching.

In one embodiment, during the second time interval, the second upper switch and the second lower switch operate in a hard switching.

Accordingly, the present disclosure has the following features and advantages: 1. There is no need to modify existing hardware and mechanical components, and there is no need to increase development costs; 2. It can effectively and significantly reduce the losses caused by MOSFET switching, increase efficiency, and improve component temperature rise; 3. The active interleaved method controls MOSFETs to disperse heat loss, prevent temperature rise from being concentrated on specific components, and extend service life; 4.The burst mode is replaced and the smart-PWM operation mode is used in light load or low voltage situations to effectively reduce output transient ripples; 5. Compared with the traditional PWM operation method, better EMC effects can be acquired by improving the hard switching of MOSFETs; 6. Compared with the traditional PSM operation method, there is no need to use phase shift control, and software development and implementation are simple.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1 is a circuit diagram of a full-bridge resonant converter according to the present disclosure.
FIG. 2 is schematic waveforms of current, voltage, control signal under the full-bridge resonant converter operating in a PWM mode according to the present disclosure.
FIG. 3 is schematic waveforms of current, voltage, control signal under the full-bridge resonant converter operating in a PSM mode according to the present disclosure.
FIG. 4 is schematic waveforms of current, voltage, control signal under the full-bridge resonant converter operating in an interleaved control method according to the present disclosure.
FIG. 5 is a flowchart of a method of controlling the full-bridge resonant converter according to the present disclosure.

### DETAILED DESCRIPTION

Reference will now be made to the drawing figures to describe the present disclosure in detail. It will be understood that the drawing figures and exemplified embodiments of present disclosure are not limited to the details thereof.

The primary side of the full-bridge LLC resonant converter is composed of four power switches (MOSFETs) in two bridge arms, a resonant inductor, a transformer leakage inductance, a transformer magnetizing inductance, and a resonant capacitor. The main operation mode of the full-bridge LLC resonant converter is a pulse frequency modulation (PFM). Under the condition of fixed switching duty cycle, the method of modulating MOSFET switching frequency is used to achieve conversion power and output voltage control, and the resonant tank design and component specifications are selected according to the output specification requirements. According to the design, the gain curve of the resonant converter is acquired and the switching frequency operating range is determined. According to the gain curve, it can be observed that under light load or low voltage conditions, the MOSFET switching frequency needs to be modulated in the high-frequency direction to acquire a stable output voltage.

Since characteristic limitations of relevant components will limit the upper limit of switching frequency operation, when the switching frequency needs to be adjusted higher than the limit range, usually the controller will directly turn off the MOSFET. Until the voltage drops and the MOSFET switching frequency also drops to the operation range, the MOSFET will continue to switch and continue to transmit energy to the output, and such operation mode is called a burst mode. However, this operation mode will cause large output transient ripples and intermittent supply of energy, resulting in output current oscillation. Therefore, using a duty modulation operation mode to replace or improve the impact of burst mode has been widely discussed and applied in recent years.

When the full-bridge LLC resonant converter uses the traditional duty modulation method under light load or low voltage conditions, the soft switching characteristics will be lost, resulting in an increase in MOSFET switching losses, a decrease in efficiency, and an increase in the temperature of the MOSFET components, thereby causing component damage and reduction in service life. The technical feature of the present disclosure is that it does not require modification of the existing hardware circuit topology, is more efficient than traditional methods, and can effectively reduce the temperature of MOSFET components, extend the service life of vehicle components, and can also extend the life of machinery such as water-cooled pumps and water-cooled fans.

The present disclosure uses innovative control methods and strategies to significantly reduce the switching loss of the full-bridge LLC resonant converter. At the same time, this control strategy can also disperse the accumulated temperature of MOSFET components, avoid increasing the burden on the water cooling system due to high temperatures, and avoid the need to limit the output capability (de-rating) due to excessive temperatures, thereby increasing product practicality and consumer experience. In addition, when the load changes, the transient phenomenon of unstable oscillation of output voltage and current will not be caused by mode switching. The present disclosure determines the feasibility of its concept through simulation analysis, conducts actual product test verification and waveform measurement comparison observation, and further uses temperature rise testing to prove the perfect improvement effect of this technology.

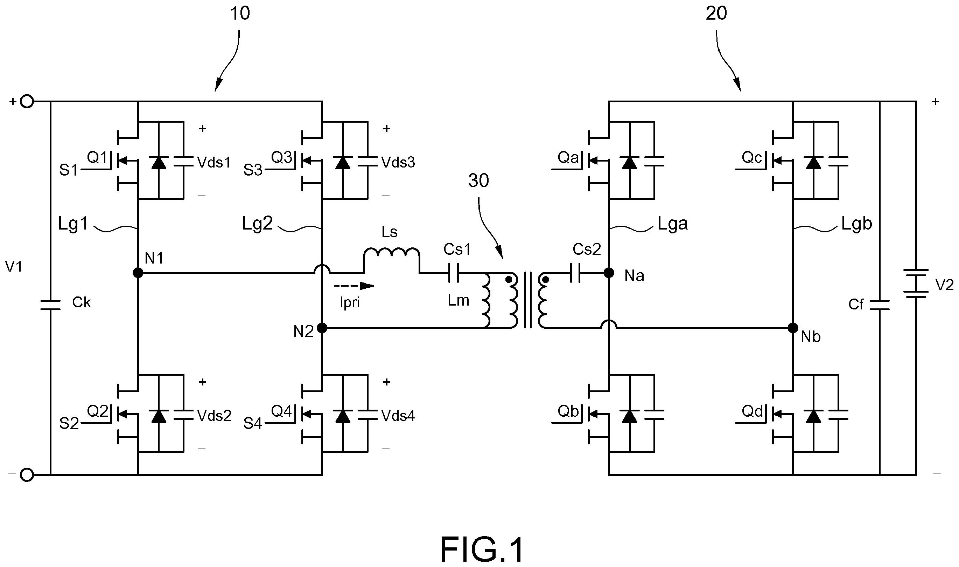

Please refer to FIG. 1, which shows a circuit diagram of a full-bridge resonant converter according to the present disclosure. Specifically, the full-bridge resonant converter shown in FIG. 1 is a full-bridge bidirectional CLLC resonant converter. The full-bridge bidirectional CLLC resonant converter includes a DC bus side and a battery side. Since the full-bridge bidirectional CLLC resonant converter has a bidirectional power flow structure, the DC bus side or the battery side may be used as the input side, and the other side is the output side.

Since the full-bridge bidirectional CLLC resonant converter has a symmetrical power conversion structure, for convenience of explanation, the DC bus side is the input side, and the battery side is the output side. As shown in FIG. 1, the full-bridge resonant converter includes an input side circuit 10, an output side circuit 20, and a resonant circuit 30. The input side circuit 10 includes a first bridge arm Lg1 and a second bridge arm Lg2 connected in parallel. The first bridge arm Lg1 includes a first upper switch Q1 and a first lower switch Q2. The second bridge arm Lg2 includes a second upper switch Q3 and a second lower switch Q4. The first upper switch Q1 and the first lower switch Q2 are commonly connected at a first node N1, and the second upper switch Q3 and the second lower switch Q4 are commonly connected at a second node N2. In particular, the switches Q1-Q4 are controlled by control signals generated by a controller (or control circuit, not shown). Specifically, the controller generates a first upper switch control signal S 1 to control the first upper switch Q1, generates a first lower switch control signal S2 to control the first lower switch Q2, generates a second upper switch control signal S3 to control the second upper switch Q3, and generates a second lower switch control signal S4 to control the second lower switch Q4. In addition, the input side circuit 10 further an input capacitor Ck.

As shown in FIG. 1, the output side circuit 20 includes a first bridge arm Lga and a second bridge arm Lgb connected in parallel. The first bridge arm Lga includes a first upper switch Qa and a first lower switch Qb. The second bridge arm Lgb includes a second upper switch Qc and a second lower switch Qd. The first upper switch Qa and the first lower switch Qb are commonly connected at a first node Na, and the second upper switch Qc and the second lower switch Qd are commonly connected at a second node Nb. In particular, the switches Qa-Qd are controlled by control signals generated by the controller. In addition, the output side circuit 20 further includes an output filter capacitor Cf.

The MOSFET switching switches of the full-bridge CLLC resonant converter are mainly controlled by a PFM switching method for energy modulation control. When the load is light or the voltage is low, the control strategy of modulating duty will be replaced to improve the impact of the burst mode. In duty mode, the parasitic capacitance voltage on the MOSFET switch enters the soft switching range after the discharge is completed. However, due to the long dead time, the parasitic capacitance voltage is recharged due to commutation of the resonant tank current, resulting in the loss of soft switching. Moreover, the parasitic capacitance ringing voltage before the MOSFET switching switch is turned on will cause hard switching when the MOSFET switching switch is turned on, which will cause serious energy loss, component temperature rise, electromagnetic radiation interference (EMC), etc. Therefore, an innovative control strategy proposed by the present disclosure will effectively reduce and improve the hard switching of the MOSFET switching switch, and disperse component losses and reduce temperature of the MOSFET switching switch when the full-bridge CLLC resonant converter operates in the duty mode such as the pulse width modulation (PWM) or the phase shift modulation (PSM) mode due to the light-load condition or the low-voltage condition.

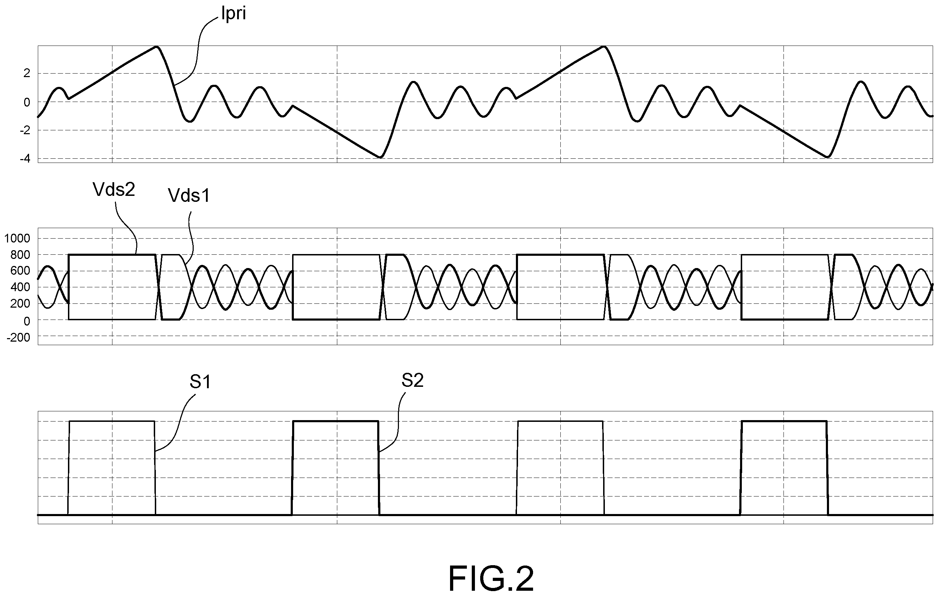

Please refer to FIG. 2, which shows schematic waveforms of current, voltage, control signal under the full-bridge resonant converter operating in a PWM mode according to the present disclosure. As shown in FIG. 2, S1 is the input side upper arm MOSFET driving signal waveform, S2 is the input side lower arm MOSFET driving signal waveform, Vds1 is the input side upper arm MOSFET parasitic capacitance voltage waveform, Vds2 is the input side lower arm MOSFET parasitic capacitance voltage waveform, and Ipri is the input side resonant current waveform, which can observe the energy transfer when the MOSFET switching switch is turned on. Also, the driving signal waveforms S 1, S2 and the parasitic capacitance voltage waveforms Vds1, Vds2 can observe that the MOSFET switching switch operates in a hard switching state in PWM mode. Since the voltage Vds in the ringing state is forced to short-circuit when the MOSFET switching switch is turned on (S1, S2 low to high), it can be realized that in the PWM mode, the four MOSFET switching switches on both arms of the input side are operating in a hard switching state, which will cause serious energy loss and component temperature rise.

In the actual machine test, the full-bridge CLLC resonant converter uses the PWM mode to implement the duty modulation method, which further verified the loss and component temperature increase caused by the hard switching condition of the MOSFET switching switch. Under the test output voltage of 350 volts, the ambient temperature of 25 degrees, and the cooling water temperature of 25 degrees, when the load drops and the MOSFET switching switch enters the duty mode range, the temperature of the MOSFET switching switch rises sharply to the protection point due to the losses caused by hard switching. Although this method improves the impact caused by the burst mode, it brings about a decrease in efficiency and may require increased costs to overcome the problem of rising component temperatures.

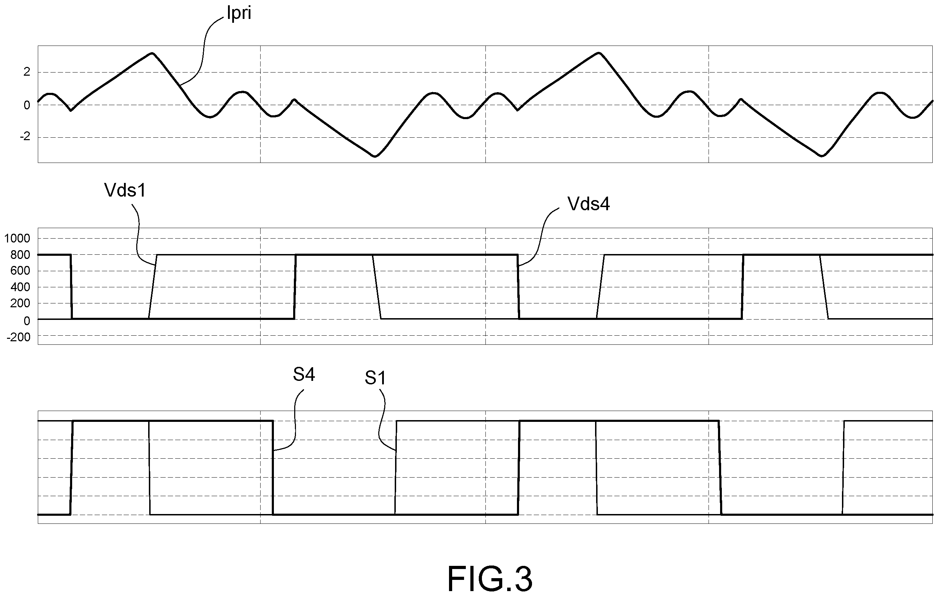

Please refer to FIG. 3, which shows schematic waveforms of current, voltage, control signal under the full-bridge resonant converter operating in a PSM mode according to the present disclosure. FIG. 3 uses PSM mode to implement duty modulation method for the full-bridge CLLC resonant converter, and observe switching status of the MOSFET switching switch through waveforms. The switching status of the MOSFET switching switch in the PSM mode can be observed through the driving signal waveforms S1-S4 and the parasitic capacitance voltage waveforms Vds-Vds4. In this operation mode, the leading arm drives the MOSFET switching switch to be turned on when the voltage Vds1 is zero, and operate in the soft switching state. However, when the MOSFET switching switch is turned on (S4 low to high), the falling arm will force voltage Vds4 at 800 volts to be short-circuited. Therefore, it can be realized that in the PSM mode, there are four MOSFET switching switches in the two arms of the input side. Although the two MOSFET switching switches in the leading arm operate in soft switching, the two MOSFET switching switches in the lagging arm still operate in hard switching, and the voltage Vds4 is higher than that in the PWM modulation method. Compared with the PWM modulation, although it can reduce some losses and increase efficiency, the problem of temperature rise of hard switching MOSFET switching switches still exists.

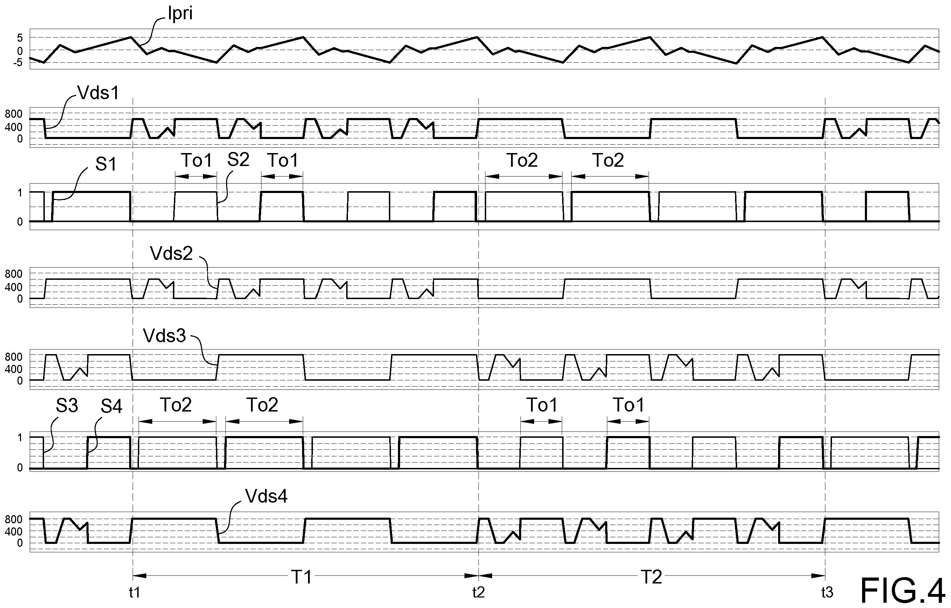

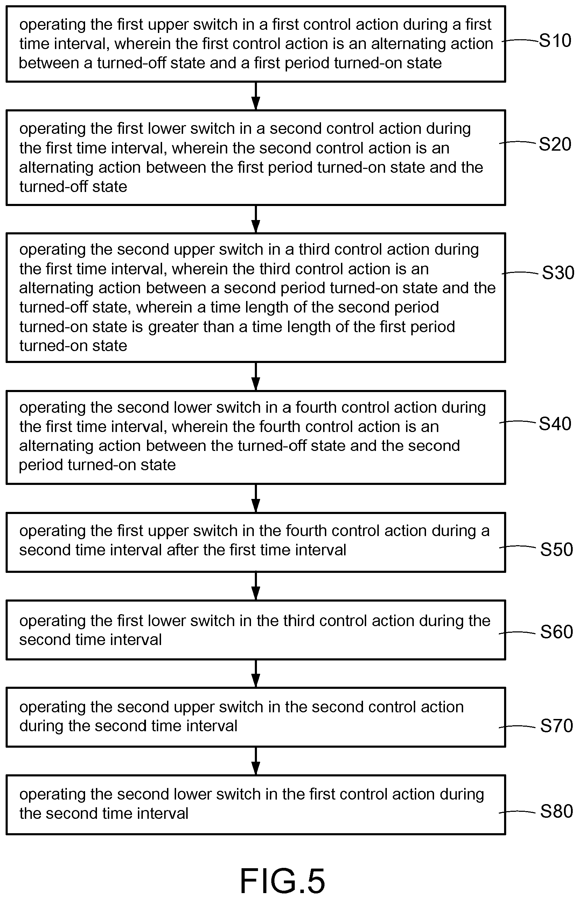

Please refer to FIG. 5, which shows a flowchart of a method of controlling the full-bridge resonant converter according to the present disclosure. The control method of the full-bridge resonant converter of the present disclosure is not limited to controlling the full-bridge bidirectional CLLC resonant converter shown in FIG. 1. For convenience of explanation, the control method in FIG. 5 is explained with the full-bridge bidirectional CLLC resonant converter shown in FIG. 1 as an example. Furthermore, as shown in FIG. 4, which shows schematic waveforms of current, voltage, control signal under the full-bridge resonant converter operating in an interleaved control method according to the present disclosure. As mentioned above, the input side circuit 10 includes a first bridge arm Lg1 and a second bridge arm Lg2. The first bridge arm Lg1 includes a first upper switch Q1 and a first lower switch Q2. The second bridge arm Lg2 includes a second upper switch Q3 and a second lower switch Q4. The controller generates a first upper switch control signal S1 to control the first upper switch Q1, generates a first lower switch control signal S2 to control the first lower switch Q2, generates a second upper switch control signal S3 to control the second upper switch Q3, and generates a second lower switch control signal S4 to control the second lower switch Q4.

The method includes steps of: operating the first upper switch Q1 in a first control action during a first time interval T1, wherein the first control action is an alternating action between a turned-off state and a first period turned-on state (step S10). As shown in FIG. 4, the first time interval T1 is a time interval between time t1 and time t2. In addition, the second time interval T2 is a time interval between time t2 and time t3. In particular, during the operation, the first time interval T1 and the second time interval T2 alternate. The first control action is that the first upper switch control signal S 1 with a low level continuously turns off the first upper switch Q1, and then the first upper switch control signal S 1 with a high level continuously turns on the first upper switch Q1 during a time length To1 of the first period turned-on state. In particular, the turned-off state and the first period turned-on state are alternating.

Simultaneously, operating the first lower switch Q2 in a second control action during the first time interval T1, wherein the second control action is an alternating action between the first period turned-on state and the turned-off state (step S20). As shown in FIG. 4, the second control action is that the first lower switch control signal S2 with a high level continuously turns on the first lower switch Q2 during a time length To1 of the first period turned-on state, and then the first lower switch control signal S2 with a low level continuously turns off the first lower switch Q2. In particular, the first period turned-on state and the turned-off state are alternating.

Simultaneously, operating the second upper switch Q3 in a third control action during the first time interval T1, wherein the third control action is an alternating action between a second period turned-on state and the turned-off state (step S30). In particular, a time length To2 of the second period turned-on state is greater than a time length To1 of the first period turned-on state. As shown in FIG. 4, the third control action is that the second upper switch control signal S3 with a high level continuously turns on the second upper switch Q3 during a time length To2 of the second period turned-on state, and then the second upper switch control signal S3 with a low level continuously turns off the second upper switch Q3. In particular, the second period turned-on state and the turned-off state are alternating.

Simultaneously, operating the second lower switch Q4 in a fourth control action during the first time interval T1, wherein the fourth control action is an alternating action between the turned-off state and the second period turned-on state (step S40). As shown in FIG. 4, the fourth control action is that the second lower switch control signal S4 with a low level continuously turns off the second lower switch Q4, and then the second lower switch control signal S4 with a high level continuously turns on the second lower switch Q4 during a time length To2 of the second period turned-on state. In particular, the turned-off state and the second period turned-on state are alternating.

Afterward, operating the first upper switch Q1 in the fourth control action during a second time interval T2 after the first time interval T1 (step S50). As shown in FIG. 4, the fourth control action is that the first upper switch control signal S1 with a low level continuously turns off the first upper switch Q1, and then the first upper switch control signal S1 with a high level continuously turns on the first upper switch Q1 during a time length To2 of the second period turned-on state. In particular, the turned-off state and the second period turned-on state are alternating.

Simultaneously, operating the first lower switch Q2 in the third control action during the second time interval T2 (step S60). As shown in FIG. 4, the third control action is that the first lower switch control signal S2 with a high level continuously turns on the first lower switch Q2 during a time length To2 of the second period turned-on state, and then the first lower switch control signal S2 with a low level continuously turns off the first lower switch Q2. In particular, the second period turned-on state and the turned-off state are alternating.

Simultaneously, operating the second upper switch Q3 in the second control action during the second time interval T2 (step S70). As shown in FIG. 4, the second control action is that the second upper switch control signal S3 with a high level continuously turns on the second upper switch Q3 during a time length To1 of the first period turned-on state, and then the second upper switch control signal S3 with a low level continuously turns off the second upper switch Q3. In particular, the first period turned-on state and the turned-off state are alternating.

Simultaneously, operating the second lower switch Q4 in the first control action during the second time interval T2 (step S80). As shown in FIG. 4, the first control action is that the second lower switch control signal S4 with a low level continuously turns off the second lower switch Q4, and then the second lower switch control signal S4 with a high level continuously turns on the second lower switch Q4 during a time length To1 of the first period turned-on state. In particular, the turned-off state and the first period turned-on state are alternating.

According to the above-mentioned descriptions, it can be realized that: in the first time interval T1, the first period turned-on state of the second control action of the first lower switch Q2 partially overlaps with the second period turned-on state of the third control action of the second upper switch Q3. Moreover, in the first time interval T1, the first period turned-on state of the first control action of the first upper switch Q1 partially overlaps with the second period turned-on state of the fourth control action of the second lower switch Q4. Moreover, in the second time interval T2, the first period turned-on state of the second control action of the second upper switch Q3 partially overlaps with the second period turned-on state of the third control action of the first lower switch Q2. Moreover, in the second time interval T2, the first period turned-on state of the first control action of the second lower switch Q4 partially overlaps with the second period turned-on state of the fourth control action of the first upper switch Q1. Moreover, the interleaved control method of the full-bridge resonant converter with asymmetric and non-complementary characteristics proposed by the present disclosure can observe the soft switching or hard switching of each switch from the parasitic capacitance voltage waveform of each switch. Moreover, in the first time interval T1, the first upper switch Q1 and the first lower switch Q2 operate in a hard switching, and in the second time interval T2, the first upper switch Q1 and the first lower switch Q2 operate in a soft switching. Correspondingly, in the first time interval T1, the second upper switch Q3 and the second lower switch Q4 operate in a soft switching, and in the second time interval T2, the second upper switch Q3 and the second lower switch Q4 operate in a hard switching.

Accordingly, the present disclosure provides a novel smart-PWM duty modulation. Compared with the traditional PWM and PSM operation modes, it has been proven through practice that it can be applied to the lighter load or low voltage duty modulation range of the full-bridge CLLC resonant converter or the full-bridge LLC resonant converter. This control strategy can effectively reduce switching losses, increase efficiency, and improve problems caused by temperature rise of MOSFET components. The technical features of the present disclosure are described below. 1. Different from the traditional full-bridge phase-shift converter switching method, two MOSFET switching switches in one bridge arm can operate in soft switching without using phase shift, thereby effectively reducing MOSFET switching losses. In full-bridge LLC resonant converter applications, the efficiency of the other bridge arm can also be improved; 2. Different from the traditional full-bridge converter switching method, the first upper switch Q1, the first lower switch Q2, the second lower switch Q4, and the second upper switch Q3 on the input side will be driven and turned on in an asymmetric manner; 3. The first upper switch Q1, the first lower switch Q2 or the second lower switch Q4 and the second upper switch Q3 on the input side use non-complementary PWM mode for duty modulation control; 4. The first upper switch Q1, the first lower switch Q2, the second lower switch Q4, and the second upper switch Q3 on the input side are driven and turned on using an interleaved control method, and the number of interleaving is further controlled to achieve a temperature rise dispersion and balance; 5. The phase timing of the input side resonant current Ipri waveform is the same as that of the traditional PWM mode duty modulation method, which will not cause transformer saturation or excitation offset; 6. When the load or output changes, switching between PFM and PWM modulation modes will not cause abnormal transient phenomena.

By observing the switching status of the MOSFET switching switch in the smart-PWM operation mode of the present disclosure through the driving signal waveforms S1-S4 and the parasitic capacitance voltage waveforms Vds1-Vds4, it can be found that the smart-PWM operation mode is similar to the PSM operation mode, which enables one bridge arm to turn on the MOSFET switching switch when the voltage Vds is zero, allowing it to operate in a soft switching state. It is also observed that if the voltage Vds is in a ringing state when the other bridge arm turns on the MOSFET switching switch to operate in hard switching, and therefore the voltage Vds is lower than that in the PSM operation mode, the switching loss is smaller, and better efficiency improvements can be acquired. By observing the switching status of the smart-PWM operation mode of the present disclosure, it can be found that the two bridge arms on the primary side take turns operating in a soft switching status. Therefore, it can effectively improve the temperature rise of single-arm MOSFET switching switches in PSM operation mode. It can even further use temperature sensing to plan and actively control the number of operations of the two bridge arms taking turns to soft switching to achieve the best temperature rise improvement. Furthermore, it can be observed that the dynamic stability of the smart-PWM operation mode of the present disclosure during mode switching will not cause abnormal instability of the controller and output current, and the output can be stably controlled after mode switching.

According to the measured temperature rise of MOSFET switching switches, compared with the traditional PWM mode duty modulation method, the smart-PWM operation mode of the present disclosure has a significant improvement effect. When the ambient temperature is 25 degrees Celsius, the cooling water temperature is 25 degrees Celsius, and the same output load condition is used, after using the smart-PWM duty modulation method of the present disclosure, the MOSFET switching switch temperature has been greatly improved from the original situation of greater than 125 degrees Celsius and unable to achieve thermal stability to 72 degrees Celsius with stable thermal balance. Furthermore, further tests were conducted to verify the worst-case scenario of an ambient temperature of 85 degrees Celsius and a cooling water temperature of 65 degrees Celsius with an output voltage of 246 volts, and the excellent performance of stable thermal balance of 115.5 degrees Celsius can also be acquired.

As will become apparent to the skilled person when studying the above disclosure in conjunction with the appended claims, the appended claims may also be understood as multiple dependent although these have been drafted as single dependent claims. Hence, e.g., the expression `The method of controlling the full-bridge resonant converter as claimed in claim 1' is to be understood also in the sense of `The method of controlling the full-bridge resonant converter as claimed in any of the preceding claims' or with reference to any combination of antecedent claims as far as disclosed in the above disclosure.

In summary, the present disclosure has the following features and advantages:
1. There is no need to modify existing hardware and mechanical components, and there is no need to increase development costs.
2. It can effectively and significantly reduce the losses caused by MOSFET switching, increase efficiency, and improve component temperature rise.
3. The active interleaved method controls MOSFETs to disperse heat loss, prevent temperature rise from being concentrated on specific components, and extend service life.
4.The burst mode is replaced and the smart-PWM operation mode is used in light load or low voltage situations to effectively reduce output transient ripples.
5. Compared with the traditional PWM operation method, better EMC effects can be acquired by improving the hard switching of MOSFETs.
6. Compared with the traditional PSM operation method, there is no need to use phase shift control, and software development and implementation are simple.

## Claims

1. A method of controlling a full-bridge resonant converter, the full-bridge resonant converter comprising a first bridge arm (Lg1) and a second bridge arm (Lg2) of an input side circuit (10) of the full-bridge resonant converter; the first bridge arm (Lg1) comprising a first upper switch (Q1) and a first lower switch (Q2), the second bridge arm (Lg2) comprising a second upper switch (Q3) and a second lower switch (Q4), **characterized in that** the method comprising steps of:
operating the first upper switch (Q1) in a first control action during a first time interval (T1), wherein the first control action is an alternating action between a turned-off state and a first period turned-on state,
operating the first lower switch (Q2) in a second control action during the first time interval (T1), wherein the second control action is an alternating action between the first period turned-on state and the turned-off state,
operating the second upper switch (Q3) in a third control action during the first time interval (T1), wherein the third control action is an alternating action between a second period turned-on state and the turned-off state, wherein a time length of the second period turned-on state is greater than a time length of the first period turned-on state,
operating the second lower switch (Q4) in a fourth control action during the first time interval (T1), wherein the fourth control action is an alternating action between the turned-off state and the second period turned-on state,
operating the first upper switch (Q1) in the fourth control action during a second time interval (T2) after the first time interval (T1),
operating the first lower switch (Q2) in the third control action during the second time interval (T2),
operating the second upper switch (Q3) in the second control action during the second time interval (T2), and
operating the second lower switch (Q4) in the first control action during the second time interval (T2).

2. The method of controlling the full-bridge resonant converter as claimed in claim 1, wherein in the first time interval (T1), the first period turned-on state of the second control action of the first lower switch (Q2) partially overlaps with the second period turned-on state of the third control action of the second upper switch (Q3).

3. The method of controlling the full-bridge resonant converter as claimed in claim 1, wherein in the first time interval (T1), the first period turned-on state of the first control action of the first upper switch (Q1) partially overlaps with the second period turned-on state of the fourth control action of the second lower switch (Q4).

4. The method of controlling the full-bridge resonant converter as claimed in claim 1, wherein in the second time interval (T2), the first period turned-on state of the second control action of the second upper switch (Q3) partially overlaps with the second period turned-on state of the third control action of the first lower switch (Q2).

5. The method of controlling the full-bridge resonant converter as claimed in claim 1, wherein in the second time interval (T2), the first period turned-on state of the first control action of the second lower switch (Q4) partially overlaps with the second period turned-on state of the fourth control action of the first upper switch (Q1).

6. The method of controlling the full-bridge resonant converter as claimed in claim 1, wherein in the first time interval (T1), the first upper switch (Q1) and the first lower switch (Q2) operate in a hard switching.

7. The method of controlling the full-bridge resonant converter as claimed in claim 1, wherein in the first time interval (T1), the second upper switch (Q3) and the second lower switch (Q4) operate in a soft switching.

8. The method of controlling the full-bridge resonant converter as claimed in claim 1, wherein in the second time interval (T2), the first upper switch (Q1) and the first lower switch (Q2) operate in a soft switching.

9. The method of controlling the full-bridge resonant converter as claimed in claim 1, wherein in the second time interval (T2), the second upper switch (Q3) and the second lower switch (Q4) operate in a hard switching.

## Amended claims

### Amended claims in accordance with Rule 137(2) EPC.

1. A method of controlling a full-bridge resonant converter comprising a first bridge arm (Lg1) and a second bridge arm (Lg2) of an input side circuit (10) of the full-bridge resonant converter, wherein the first bridge arm (Lg1) comprises a first upper switch (Q1) and a first lower switch (Q2), and the second bridge arm (Lg2) comprises a second upper switch (Q3) and a second lower switch (Q4), said method comprising steps of:
operating the first upper switch (Q1) in a first control action during a first time interval (T1), wherein the first control action is an alternating action between a turned-off state and a first period turned-on state,
operating the first lower switch (Q2) in a second control action during the first time interval (T1), wherein the second control action is an alternating action between the first period turned-on state and the turned-off state,
operating the second upper switch (Q3) in a third control action during the first time interval (T1), wherein the third control action is an alternating action between a second period turned-on state and the turned-off state, wherein a time length of the second period turned-on state is greater than a time length of the first period turned-on state,
operating the second lower switch (Q4) in a fourth control action during the first time interval (T1), wherein the fourth control action is an alternating action between the turned-off state and the second period turned-on state,
operating the first upper switch (Q1) in the fourth control action during a second time interval (T2) after the first time interval (T1),
operating the first lower switch (Q2) in the third control action during the second time interval (T2),
operating the second upper switch (Q3) in the second control action during the second time interval (T2), and
operating the second lower switch (Q4) in the first control action during the second time interval (T2).

2. The method of controlling as claimed in claim 1, wherein in the first time interval (T1), the first period turned-on state of the second control action of the first lower switch (Q2) partially overlaps with the second period turned-on state of the third control action of the second upper switch (Q3).

3. The method of controlling as claimed in claim 1, wherein in the first time interval (T1), the first period turned-on state of the first control action of the first upper switch (Q1) partially overlaps with the second period turned-on state of the fourth control action of the second lower switch (Q4).

4. The method of controlling as claimed in claim 1, wherein in the second time interval (T2), the first period turned-on state of the second control action of the second upper switch (Q3) partially overlaps with the second period turned-on state of the third control action of the first lower switch (Q2).

5. The method of controlling as claimed in claim 1, wherein in the second time interval (T2), the first period turned-on state of the first control action of the second lower switch (Q4) partially overlaps with the second period turned-on state of the fourth control action of the first upper switch (Q1).

6. The method of controlling as claimed in claim 1, wherein in the first time interval (T1), the first upper switch (Q1) and the first lower switch (Q2) operate in a hard switching.

7. The method of controlling as claimed in claim 1, wherein in the first time interval (T1), the second upper switch (Q3) and the second lower switch (Q4) operate in a soft switching.

8. The method of controlling as claimed in claim 1, wherein in the second time interval (T2), the first upper switch (Q1) and the first lower switch (Q2) operate in a soft switching.

9. The method of controlling as claimed in claim 1, wherein in the second time interval (T2), the second upper switch (Q3) and the second lower switch (Q4) operate in a hard switching.
